# EUROPEAN PATENT SPECIFICATION

(11) **EP 0 481 775 B1**
(45) Date of publication and mention of the grant of the patent: **05.06.1996**
(21) Application number: 91309569.1
(22) Date of filing: 17.10.1991
(51) Int. Cl.: G11B 5/84, G11B 5/85, G11B 5/64

(54) **Thin film magnetic tape and method and apparatus for producing the same**
Dünnfilm-Magnetband sowie Verfahren und Gerät zur Herstellung desselben
Bande magnétique à couche mince et méthode et dispositif de fabrication d'une telle bande

(30) Priority: 19.10.1990 JP 282125/90
(43) Date of publication of application: 22.04.1992
(73) Proprietor: MATSUSHITA ELECTRIC INDUSTRIAL CO., LTD., Kadoma-shi, Osaka-fu, 571 (JP)
(72) Inventor: Odagiri, Masaru, Kawanishi-shi, Hyogo-ken 666-01 (JP)
(74) Representative: Crawford, Andrew Birkby

(56) References cited:
- DE-A- 3 232 520
- IEEE TRANSACTIONS ON MAGNETICS vol. 23, no. 5, September 1987, NEW YORK US pages 2046 - 2048; Y. TANAKA ET AL.: 'INCLINING COLUMNAR STRUCTURE IN Co-Cr FILMS PREPARED BY ROLL MAGNETRON SPUTTERING'
- PATENT ABSTRACTS OF JAPAN vol. 10, no. 338 (P-516) 15 November 1986 & JP-A-61 139 919
- PATENT ABSTRACTS OF JAPAN vol. 13, no. 104 (P-842) 13 March 1989 & JP-A-63 282 917
- F.Jorgenson Handbook of Magnetic Recording, 1988, p.258,259

## Description

The present invention relates to a thin film magnetic tape in which a decrease in the output level caused by mismatching of the magnetic anisotropy with the tape track angle and the azimuth angle which both are increased in an advanced helical scanning video taperecorder, can be minimized and also, a method and an apparatus for producing the same.

For high-density magnetic recording, thin film magnetic tapes fabricated by a vapor deposition method have been developed and marketed. In general, those are known as vacuum deposited tapes or ME tapes, of which a magnetic thin film is formed by vaporizing a cobalt/nickel alloy under an oxygen partial pressure with an electron beam emitter and depositing it by a vacuum vapor deposition technique on a non-magnetic base film of e.g. polyethylene-terephthalate which travels on a cylindrical cooling can.

Such a known vacuum deposited tape exhibits a high magnetic anisotropy characteristic oriented lengthwisely thereof so that the output level of data recorded lengthwisely onto the tape with a ring-type magnetic head having no azimuth (0 degree of azimuth angle) is higher, more than 6 dB at a short-wave-length range, than that of a coating-type tape. As a common VCR or DAT is now demanded to be more compact in the size, the diameter of a helical scanning head cylinder and the width of each recording track of a recording tape become minimized. As the result, both the track angle on a recording tape and the azimuth angle are greater inevitably. If the track angle is 15° and the azimuth angle is ±20°, the direction of magnetic recording (at a right angle to the head gap) is +35° or -5° to the running direction of the recording tape. A conventional metal deposited magnetic recording tape has a high magnetic anisotropy oriented lengthwisely thereof and thus, produces a difference of 4 to 5 dB in the output level between +35° and -5° recording signals (i.e. the output level is lower at +35°). The difference is decreased by using a specific magnetic material which can be propagated at a smaller atomic incident angle onto a base film for development of an isotropic magnetic thin film. However, the output level at +35° will hardly be improved while the output level at -5° is lowered. As the result, the recording density becomes low. Also, the difference is reduced by having the track width for +35° recording greater than that for -5° recording. This tends to decline the compatibility with a coating-type tape and sacrifice the picture quality in special playback modes.

The present invention has been developed to overcome the foregoing drawback and its object is to provide an improved thin film magnetic tape in which a decrease in the output level caused by mismatching of the magnetic anisotropy with the tape track angle and the azimuth angle which both are increased in an advanced helical scanning video taperecorder, can be minimized and also, a difference of the output level between discrete azimuth record/playback heads can be reduced.

For achievement of the object, a thin film magnetic tape obtainable by the methods according to the present invention has a magnetic thin film formed on a non-magnetic base film and arranged in which an in-phase magnetic anisotropy is oriented in oblique relationship to longitudinal direction of the tape.

According to the present invention a method is provided of producing thin film magnetic tape comprising continuously transferring in a vacuum a non-magnetic base film directly on a cooling can; and at the same time, feeding a vapor of atoms or ions of a magnetic material onto the non-magnetic material, characterised in that the can is conical.

According to another aspect of the present invention, a method is provided for producing a thin film magnetic tape comprising:
transferring continuously a non-magnetic base film directly on a cylindrical cooling can in a vacuum; and at the same time, feeding a vapor of atoms or ions of the magnetic material onto a non-magnetic material, characterized in that the axis of the can is arranged obliquely relative to a vapor direction of a magnetic material.

An apparatus for producing a thin film magnetic tape of the present invention comprises a cooling can arranged in a vacuum chamber;
a mechanism for continuously transferring a non-magnetic base film directly on the cooling can; and
an assembly arranged opposite to the cooling can for generating a vapor of atoms or ions of a magnetic material, characterized in that the can is conical.

According to yet another aspect of the invention, apparatus is provided for producing a thin film magnetic tape comprising:
a cylindrical cooling can in a vacuum chamber;
a mechanism for continuously transferring a non-magnetic base film directly on the cooling can; and an assembly arranged opposite to the cooling can for generating a vapor of atoms or ions of the magnetic material, characterized in that the axis of the can is arranged obliquely relative to a vapor director of a magnetic material.

The thin film magnetic tape of the present invention has the magnetic anisotropy in-plane oriented at a predetermined oblique angle to the longitudinal direction of the tape so that its magnetizing direction can match the scanning direction of the head for helical scanning recording. For example, if the track angle is 15° and the azimuth angle is ±20°, similar to the previous example, the recording direction (at a right angle to the head gap) is at angle of +35° or -5° to the travelling direction of the magnetic tape. When the in-plane magnetic anisotropy of the thin film magnetic tape of the present invention is oriented at an oblique angle around +15°, the recording direction is then at about ±20° to the easy magnetization direction thus offsetting the azimuth angle. As the result, a difference between the output levels of the heads will be eliminated and a decrease in the output level caused by the magnetic anisotropy will be reduced to as low as 1 dB.

As set forth above, the thin film magnetic tape of the present invention allows both a decrease in the output level caused by mismatching of the magnetic anisotropy with the tape track angle and the azimuth angle which both are increased in the advanced helical scanning video taperecorder, and a difference in the output level between discrete azimuth angle heads to minimized. Also, its producing method and apparatus for the present invention are provided for producing the improved thin film magnetic tapes of constant quality at low cost. Accordingly, the present invention will contribute to the compact size and high density recording of a magnetic recording device and ensure the application to industrial uses.

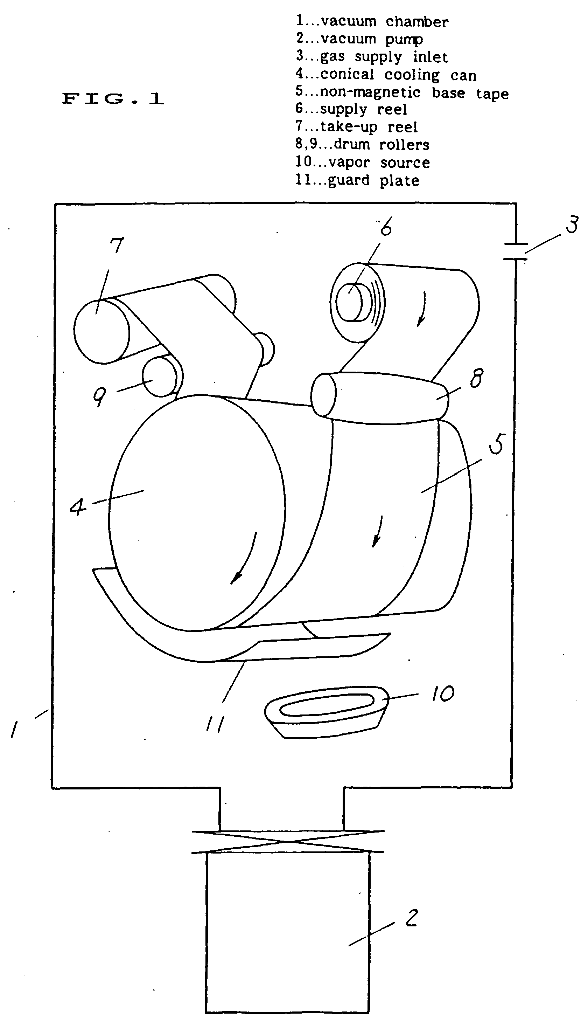

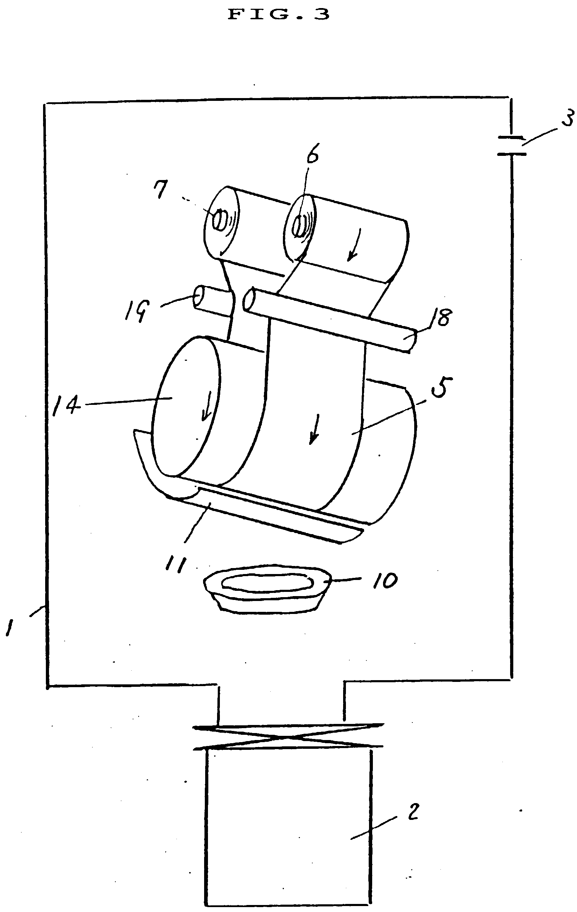

Figs.1 and 3 are schematic views of apparatuses of producing thin film magnetic tapes showing a first and a second embodiment of the present invention respectively, in which illustrated are:
1...vacuum chamber, 2...vacuum pump, 3...gas inlet, 4(in Fig.1)...conical cooling can, 5...non-magnetic base film, 6...supply reel, 7... take-up reel, 8,9(in Fig. 1)... spheroidal roller, 10...vapor source, 11...guard plate, 14(in Fig.3)... tilted cylindrical cooling can, and 18,19(in Fig.3)...cylinder roller.

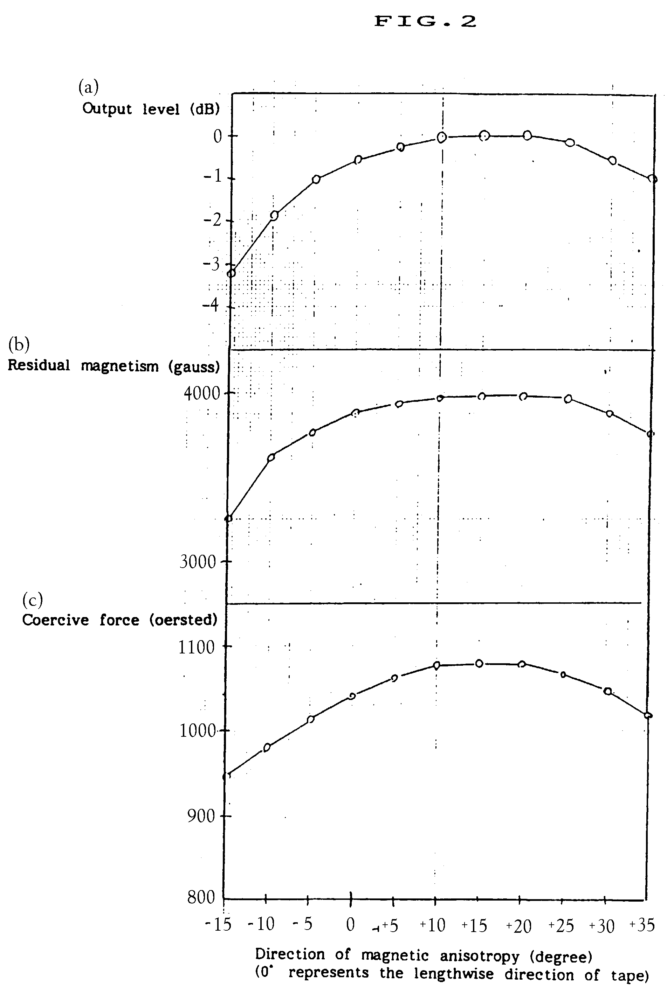

Fig. 2 is a characteristic diagram showing the relation of in-plane magnetic anisotropy to output level and magnetic characteristics of a thin film magnetic tape of the present invention.

Preferred embodiments of the present invention will now be described referring to the accompanying drawings. Fig. 1 illustrates a first embodiment of the present invention in the form of an apparatus for producing a thin film magnetic tape, in which there are provided a vacuum chamber 1, a vacuum pump 2, and a gas inlet 3 for feeding of e.g. oxygen gas. A conical cooling can 4 is arranged for transferring a non-magnetic base film 5 (e.g. a polyethylene-terephthalate film) thereon. Also, provided are a supply reel 6, a take-up reel 7, and two spheroidal rollers 8 and 9 which all are arranged at angles to the cooling can 4 so that the non-magnetic base film 5 can run obliquely to the vapor stream direction of a magnetic material. The magnetic material vapor comes from a vapor source 10 which is a magnesia crucible or a water-cooled copper hearth arranged to be heated by an unshown electron beam emitter for producing a vapor of the magnetic material, e.g. cobalt. The magnetic material vapor is deposited on the non-magnetic base film 5 when cooled down. Preferably, the vapor source 10 has a width greater than that of the base film 5 so that the thickness and magnetic anisotropy of a deposited film can be uniform at any slit position. For having the film thickness and the magnetic anisotropy uniform widthwisely of the base film 5, the conical cooling can 4 may be arranged with its lowermost extending horizontally thus allowing the distance between the non-magnetic base film 5 and the vapor source 10 to be equal throughout their widtho For this purpose, the cooling can 4 is formed into a truncated cone shape. Denoted by 11 is a guard plate for control of an incident angle of the vapor during deposition of the magnetic material on the base film 5 thus to determine the magnetic characteristics, e.g. a coercive force, of the deposited film. Also, a protective plate, not shown, may be provided for preventing the cooling can 4 from being directly exposed to the vapor. While the cooling can 4 carrying the non-magnetic base film 5 directly thereon rotates in the direction denoted by the arrow, the vapor of the magnetic material is fed at an angle to the running direction of the non-magnetic base film 5 for deposition of a magnetic thin film. The non-magnetic base film 5 with the magnetic thin film deposited thereon is then slit by a slitter machine into a plurality of thin film magnetic recording tapes of which magnetic anisotropy is at an angle to its lengthwise direction so that the easy magnetization direction can be diagonal.

The result of one experiment will then be explained. Fig.2 shows a relationship between the magnetic characteristics and the anisotropic angle of a test thin film magnetic tape produced by the apparatus illustrated in Fig.1. The apparatus was provided with the conical cooling can 4 tapered at 15° and arranged in which the vapor was fed at an angle of about 15° to the running direction of the base film 5. Using the apparatus, the test pieces were then produced by depositing a 2000-angstrom-thick thin film of a magnetic alloy material, 80 % by weight of cobalt and 20 % by weight of nickel, by a vapor deposition procedure at an oxygen partial pressure of 3x10⁻⁵ Torr on the non-magnetic base film 5 prepared from a 10-micron-thick film of polyethyl ene-terephthalate. In Fig.2, the X axis represents the angle of the magnetizing direction where 0° is the lengthwise direction of the test piece. The residual magnetism (b) and the coercive force (c) were measured with the test piece angle varied using a VSM. Using a given number of 1/2-inch wide short test pieces cut out from the magnetic thin film carrying base film at various angles of the longthwise direction of the base film, the output level (a) was measured lengthwisely of the test pieces through recording and playing back a signal of 0.5 micron in wavelength with a Sendust head having a gap length of 0.2 micron and arranged at an azimuth angle of 0°. The procedure of measurement is equivalent to the arrangement of the tape track angle and the azimuth angle in a common VCR or DAT. In fact, the azimuth angle of such a common VCR or DAT should be corrected by a degree because the moving direction and the gap of the magnetic head are not correctly at a right angle to each other. In this embodiment, the correction of the two azimuth angles of +20° and -20° is identical and thus, no explanation for the correction will be given.

As apparent from the measurements shown in Fig.2, the magnetic properties of the thin film magnetic tape of the present invention are optimum at about +15°. The maximum values of the residual magnetism, the coercive force, and the output level all appear about the degree of +15°. The output level at +15° is expressed as an absolute value equal to 0 dB.

When the tape track angle is +15° and the azimuth angle is ±20°, the recording direction of the tape is +35° or -5°. Accordingly, the two output levels at +35° and -5° are almost equal, as shown in Fig.2, and only 1 dB smaller than the maximum value.

Although not illustrated, conventional magnetic tapes which are produced by a conventional method provided with a cylindrical cooling can and arranged in which the vapor is fed lengthwisely of the tapes, exhibit similar characteristic curves as shown in Fig.2 but their maximum values of residual magnetism, coercive force, and output level appear at about the point of 0°. Hence, the output level is -4.5 dB at +35° and -0.2 dB at -5°. The difference between -4.5 and -0.2 is as high as more than 4 dB and the output level at +35° is too low.

A second embodiment of the present invention will be described referring to Fig.3. Fig.3 illustrates another apparatus for producing a thin film magnetic tape of the present invention, in which there are provided a vacuum chamber 1, a vacuum pump 2, and a gas inlet 3 for feeding of e.g. oxygen gas. A cylindrical cooling can 14 is arranged in a tilting state to a vapor stream direction of a magnetic material for transferring a non-magnetic base film 5 (e.g. a polyethylene-terephthalate film) thereon. Also, provided are a supply reel 6, a take-up reel 7, and two cylidrical rollers 18 and 19 which all are arranged tilting at the same angle as of the cooling can 14 so that the non-magnetic base film 5 can run diagonal to the vapor stream of the magnetic material. The magnetic material vapor comes from a vapor source 10 which is a magnesia crucible or a water-cooled copper hearth arranged to be heated by an unshown electron beam emitter for producing a vapor of the magnetic material, e.g. cobalt. The magnetic material vapor is deposited on the non-magnetic base film 5 when cooled down. This arrangement is differed from that shown in Fig.1 by the fact that the transfer system (of the cooling can, rollers, and supply and take-up reels) is aligned at one angle, whereby the apparatus will be constructed with more ease. However, the disadvantage is that the lowermost of the cooling can 14 is tilted against the vapor source 10 and thus, the thickness and magnetic properties of a finished tape will hardly be uniform. This can be compensated more or less by reducing the scanning speed of an electron beam in an electron beam vapor deposition procedure for increasing the rate of vaporization at a region where the distance between the cooling can 14 and the vapor source 10 is large. With the apparatus shown in Fig.3 like shown in Fig.1, the vapor of the magnetic material is fed at an angle to the running direction of the non-magnetic base film 5 for deposition of a magnetic thin film. The non-magnetic base film 5 with the magnetic thin film deposited thereon is then slit by a slitter machine into a given number of thin film magnetic recording tapes of which magnetic anisotropy is at an oblique angle to its lengthwise direction so that the easy magnetizaion direction can be diagonal.

The present invention is not limited to the magnetic material and the vapor deposition technique described above and other materials and procedures for developing thin films will be possible on condition that the magnetic anisotropy is controlled by a feeding direction of atoms or ions of a magnetic material. Although cobalt alloys with the help of oxygen is most preferred as the vapor deposition material, ferrous materials plus oxygen or nitrogen may be employed with equal success. Although the vacuum vapor deposition with electron beam heating produces a thin film at the fastest speed, procedures of ion plating, sputtering, cluster ion beam vapor deposition, and ion beam sputtering will also be appropriate for forming thin films on base films.

## Claims

1. A method of producing a thin film magnetic tape comprising:
transferring continuously a non-magnetic base film directly on a cooling can in a vacuum; and
at the same time, feeding a vapor of atoms or ions of a magnetic material onto the non-magnetic material, characterized in that the can is conical.

2. A method of producing a thin film magnetic tape comprising:
transferring continuously a non-magnetic base film directly on a cylindrical cooling can in a vacuum; and
at the same time, feeding a vapor of atoms or ions of the magnetic material onto the non-magnetic material, characterized in that the axis of the can is arranged obliquely relative to a vapor direction of the magnetic material.

3. An apparatus for producing a thin film magnetic tape comprising: a cooling can (4) arranged in a vacuum chamber (1);
a mechanism (6, 7, 8, 9) for continuously transferring a non-magnetic base film directly on the cooling can; and
an assembly (10) arranged opposite to the cooling can for generating a vapor of atoms or ions of a magnetic material, characterized in that the can is conical.

4. An apparatus for producing a thin film magnetic tape comprising:
a cylindrical cooling can (14) in a vacuum chamber (1);
a mechanism (6, 7, 18, 19) for continuously transferring a non-magnetic base film directly on the cooling can; and
an assembly (10) arranged opposited to the cooling can for generating a vapor of atoms or ions of the magnetic material, characterized in that the axis of the can is arranged obliquely relative to a vapor director of the magnetic material.

5. A thin film obtainable by the method of Claim 1 or 2 comprising:
a non-magnetic base film; and
a magnetic thin film vapor-deposited on the non-magnetic base film and having an in plane magnetic anisotropy with an easy magnetization direction orientated in oblique relationship to a longitudinal direction of the tape.

6. A thin film magnetic tape according to Claim 5, wherein the easy magnetization direction coincides approximately with the symmetric axis to a pair of different directions of the recording tracks in a standardized helical recorder with heads of different azimuth angle.

## Patentansprüche

1. Verfahren zum Herstellen eines Dünnfilm-Magnetbands, das aufweist:
Kontinuierliches Übertragen in einem Vakuum eines nicht-magnetischen Basisfilms direkt auf einer Kühlwalze und
zur gleichen Zeit Zuführen eines Dampfs aus Atomen oder Ionen eines magnetischen Materials auf das nicht-magnetische Material, gekennzeichnet dadurch, daß die Walze konisch ist.

2. Verfahren zum Herstellen eines Dünnfilm-Magnetbands, das aufweist:
kontinuierliches Übertragen eines nicht-magnetischen Basisfilms direkt auf einer zylindrischen Kühlwalze in einem Vakuum;
und zur gleichen Zeit Zuführen eines Dampfs aus Atomen oder Ionen aus dem magnetischen Material auf einem nicht-magnetischen Material, dadurch gekennzeichnet, daß die Achse der Walze schief relativ zu einer Dampfrichtung eines magnetischen Materials angeordnet ist.

3. Verfahren zum Herstellen eines Dünnfilm-Magnetbands, das aufweist: eine Kühlwalze (4), die in einer Vakuumkammer (1) angeordnet ist;
einen Mechanismus (6, 7, 8, 9) zum kontinuierlichen Übertragen eines nicht-magnetischen Basisfilms direkt auf der Kühlwalze; und
eine Anordnung (10), die gegenüberliegend der Kühlwalze zum Erzeugen eines Dampfs aus Atomen oder Ionen eines magnetischen Materials angeordnet ist, gekennzeichnet dadurch, daß die Walze konisch ist.

4. Gerät zum Herstellen eines Dünnfilm-Magnetbands, das aufweist:
eine zylindrische Kühlwalze (14) in einer Vakuumkammer (1);
einen Mechanismus (6, 7, 18, 19) zum kontinuierlichen Übertragen eines nicht-magnetischen Basisfilms direkt auf der Kühlwalze; und
eine Anordnung (10), die gegenügerliegend der Kühlwalze zum Erzeugen eines Dampfs aus Atomen oder Ionen des magnetischen Materials angeordnet ist, dadurch gekennzeichnet, daß die Achse der Walze schräg relativ zu einer Dampfrichtungsgebungseinrichtung eines magnetischen Materials angeordnet ist.

5. Dünnfilm, der durch das Verfahren nach Anspruch 1 oder 2 erhaltbar ist, der aufweist:
einen nicht-magnetischen Basisfilm; und
einen magnetischen Dünnfilm, der mittels Dampf auf dem nicht-magnetischen Basisfilm niedergeschlagen ist und eine sich in einer Ebene befindliche magnetische Anisotripie mit einer leichten Magnetisierungsrichtung besitzt, die in einer schiefen Beziehung zu einer Längsrichtung des Band orientiert ist.

6. Dünnfilm-Magnetband gemäß Anspruch 5, wobei die leichte Magnetisierungsrichtung annähernd mit der Symmetrie-Achse eines Paars unterschiedlicher Richtungen der Aufzeichnungsspuren in einem standardisierten, spiralförmigen Aufzeichnungsgerät mit Köpfen eines unterschiedlichen Azimuth-Winkels übereinstimmt.

## Revendications

1. Procédé de fabrication d'une bande magnétique à couche mince consistant à:
transférer en continu un film de base, non magnétique, sur un tambour de refroidissement, sous vide; et
en même temps, envoyer une vapeur d'atomes ou d'ions d'un matériau magnétique sur le matériau non magnétique, caractérisé par le fait que le tambour est conique.

2. Procédé de fabrication d'une bande magnétique à couche mince, consistant à:
transférer, en continu et directement, un film de base, non magnétique, sur un tambour cylindrique de refroidissement, sous vide; et
en même temps, envoyer une vapeur d'atomes ou d'ions de matériau magnétique sur le matériau non magnétique, caractérisé par le fait que l'axe du tambour est disposé obliquement par rapport à la direction du flux de vapeur du matériau magnétique.

3. Dispositif de fabrication d'une bande magnétique à couche mince, comportant: un tambour de refroidissement (4) disposé dans une chambre sous vide (1);
un mécanisme (6, 7, 8, 9) pour transférer en continu et directement un film de base, non magnétique, sur le tambour de refroidissement; et
un ensemble (10), disposé en face du tambour de refroidissement, pour générer une vapeur d'atomes ou d'ions d'un matériau magnétique, caractérisé par le fait que le tambour est conique.

4. Dispositif de fabrication d'une bande magnétique à couche mince, comportant:
un tambour cylindrique de refroidissement (14) dans une chambre sous vide (1);
un mécanisme (6, 7, 18, 19) pour transférer en continu et directement un film de base, non magnétique, sur le tambour de refroidissement; et
un ensemble (10) disposé en face du tambour de refroidissement pour générer une vapeur d'atomes ou d'ions du matériau magnétique, caractérisé par le fait que l'axe du tambour est disposé obliquement par rapport à la direction du flux de vapeur du matériau magnétique.

5. Couche mince pouvant s'obtenir par le procédé de la revendication 1 ou 2, comportant:
un film de base, non magnétique; et
une couche mince magnétique déposée, sous forme de vapeur, sur le film de base, non magnétique, et présentant une anisotropie magnétique, dans son plan, avec une direction de magnétisation facile orientée obliquement par rapport à la direction longitudinale de la bande.

6. Bande magnétique à couche mince selon la revendication 5, dans laquelle la direction de magnétisation facile coïncide approximativement avec l'axe de symétrie d'une paire de directions différentes des pistes d'enregistrement dans un enregistreur à balayage hélicoïdal standardisé à têtes d'angle d'azimut différent.
